# EUROPÄISCHE PATENTANMELDUNG

(11) **EP 1 503 569 A2**
(43) Veröffentlichungstag der Anmeldung: **02.02.2005**
(21) Anmeldenummer: 04104411.6
(22) Anmeldetag: 22.02.2003
(51) Int. Cl.: H04N 1/00

(54) **Verfahren zur Auswertung eines elektronischen Bildsensors**

(30) Priorität: 26.02.2002 DE 10208289
(62) Teilanmeldung aus: 03720128.2
(71) Anmelder: Koenig & Bauer Aktiengesellschaft, 97080 Würzburg (DE)
(72) Erfinder: Stöber, Bernd, 33378, Rheda-Wiedenbrück (DE); Türke, Thomas, 33699, Bielefeld (DE)

(57) **Zusammenfassung**

Die Erfindung betrifft ein Verfahren zur Auswertung eines elektronischen Bildsensors, der mehrere Einzelsensoren mit jeweils mehreren Pixel aufweist, wobei die Pixel mindestens eines Einzelsensors nur teilweise ausgelesen werden, so dass einzelne Bildbereiche selektiv ausgeblendet werden, um die zu verarbeitenden Menge von Bilddaten zu reduzieren, wobei die Ausgangssignale der Einzelsensoren derart aufeinander bezogen ausgewertet werden, dass die entlang einer Linie des aufzunehmenden Objekts aufgenommenen Bildinformationen geometrisch lagerichtig verarbeitet werden, dass die Pixel eines einen Teil der Linie des aufzunehmenden Objekts abbildenden Einzelsensors nur teilweise ausgelesen werden und dass die auszublendenden Teilbereiche abhängig von der Bewegung des aufzunehmenden Objekts verändert werden.

## Beschreibung

Die Erfindung betrifft ein Verfahren zur Auswertung eines elektronischen Bildsensors gemäß dem Oberbegriff des Anspruchs 1.

Gattungsgemäße Bildsensoren werden als Zeilensensoren bezeichnet und sind aus einer Vielzahl von lichtempfindlichen Pixel, die entlang einer Zeile angeordnet sind, aufgebaut. Die einzelnen Pixel wandeln Lichteingangssignale in elektrische Ausgangssignale um und erlauben dadurch eine elektronische Auswertung der mit dem Bildsensor aufgenommenen Bildinformationen. Derartige Zeilensensoren werden beispielsweise bei der Inspektion von Druckerzeugnissen, insbesondere bei der Inspektion von Wertnoten, eingesetzt.

Die erforderliche Pixelanzahl des Zeilensensors hängt im Wesentlichen von der Breite des aufzunehmenden Objekts und der für die Anwendung notwendigen Auflösung bezüglich des Objektes ab. Da die Breite des aufzunehmenden Objekts je nach Anwendungsfall stark variieren kann und immer kleinere Strukturen detektierbar sein sollen, werden nach dem Stand der Technik hochauflösende Spezialsensoren eingesetzt, die jedoch hohe Beschaffungskosten verursachen.

Die DE 40 24 618 A1 offenbart ein Gerät zur Erfassung von Oberflächeninformationen mit mehreren Sensoren, denen jeweils eine Linseneinrichtung zugeordnet ist. Diesen Linseneinrichtungen werden die Oberflächeninformationen mittels Strahlteileinrichtungen zugeführt.

Die DE 33 38 168 A1 zeigt einen Sensor mit mehreren Pixel, die wahlweise einschaltbar sind.

Die JP 63-240 261 A zeigt zwei CCD-Zeilensensoren, denen jeweils eine Optik zugeordnet ist und deren Bildbereiche überlappen. Diese überlappenden Bildbereiche werden gespeichert und selektiv aus dem Speicher ausgelesen.

Die US 4 009 388 A offenbart einen Bildsensor, der mehrere Einzelsensoren mit jeweils mehreren Pixel aufweist. Jedem Einzelsensor ist eine eigene Optik zugeordnet.

Der Erfindung liegt die Aufgabe zugrunde, ein Verfahren zur Auswertung eines elektronischen Bildsensors zu schaffen.

Die Aufgabe wird erfindungsgemäß durch die Merkmale des Anspruchs 1 gelöst.

Die Erfindung beruht auf dem Grundgedanken, den kostenaufwendigen Spezialsensor mit der gewünschten Zeilenbreite durch eine Kombination von mehreren einzeln ansteuerbaren und auswertbaren Einzelsensoren zu ersetzten. Derartige Einzelsensoren sind als Standardbauteile verfügbar und somit relativ preisgünstig. Je nach gewünschter Breite des Bildsensors kann die Anzahl der Einzelsensoren variiert werden, um insgesamt die erforderliche Sensorbreite zu gewährleisten. Jeder der Einzelsensoren ist dabei mit einer eigenen Optik zur Abbildung eines Bildbereichs ausgerüstet. Um den Bildsensor als Zeilensensor einsetzen zu können, werden die Einzelsensoren in Richtung ihrer Längsachse nebeneinander angeordnet, wobei je nach Anwendungsfall zwischen den Einzelsensoren ein bestimmter Abstand vorhanden ist. Alle Einzelsensoren werden dann jedoch gemeinsam von einer Auswerteeinrichtung angesteuert und ausgewertet, so dass die in der Auswerteeinrichtung eingehenden Bildinformationen den Bildinformationen entsprechen, wie sie ein Spezialsensor mit entsprechender Breite liefern würde.

Alle Einzelsensoren werden auf einem gemeinsamen Trägerelement angeordnet, um eine ausreichend exakte Ausrichtung der Einzelsensoren zueinander mit einfachen Mitteln zu gewährleisten. Dieses Trägerelement kann insbesondere als Elektronikplatine ausgebildet sein, auf der die Einzelsensoren bestückt sind. Außerdem kann auf der Elektronikplatine auch ein Teil der Ansteuer- und Auswerteelektronik der Auswerteeinrichtung vorgesehen werden.

Besonders vorteilhaft ist es, wenn die Einzelsensoren als teilauslesbare Sensoren ausgebildet sind. Bei diesen teilauslesbaren Sensoren ist es möglich, einzelne Pixel jedes Einzelsensors in Abhängigkeit von ihrer jeweiligen geometrischen Anordnung im Einzelsensor auszublenden. Ist beispielsweise bekannt, dass in einem bestimmten Bildausschnitt keine relevanten Bildinformationen zu erwarten sind, kann durch entsprechende Ansteuerung der teilauslesbaren Sensoren dieser Bildbereich ausgeblendet werden, so dass die in der Auswerteeinrichtung auszuwertenden Bilddaten entsprechend reduziert werden.

Insbesondere ist es auch möglich, Flächensensoren zur Herstellung eines erfindungsgemäßen Bildsensors zu verwenden, wobei dann zumindest eine Zeile des Flächensensors als Bildsensor angesteuert wird, wohingegen die anderen Zeilen des Flächensensors nicht ausgelesen werden.

Sind die Einzelsensoren als teilauslesbare Farbflächensensoren ausgebildet, so können durch entsprechende Ansteuerung eines Zeilenpaars des Farbflächensensors auch Farbinformationen aufgenommen und in die Auswerteeinrichtung weitergeleitet werden.

Besonders geeignet zur Bildung erfindungsgemäßer Bildsensoren sind CMOS-Sensoren (Complementary-Metal-Oxid-Semi conductor), da diese in einem sehr günstigen Preis/Leistungsverhältnis verfügbar sind.

Diese CMOS-Sensoren weisen teilweise einen einem Speicherbaustein entsprechenden Bildaufbau auf, so dass einzelne Pixel wie Speicherzellen abfragbar sind. Es müssen also nur Bildelemente ausgelesen werden, die tatsächlich auch ausgewertet werden sollen.

Zwischen den Einzelsensoren des Bildsensors ist ein bestimmter Abstand vorhanden. Aufgrund der vor den Einzelsensoren angeordneten Optiken kann jedoch ein breiterer Bildausschnitt auf die Einzelsensoren abgebildet werden. Damit alle Bereiche des aufzunehmenden Objekts auswertbar sind, kann der Bildsensor relativ zum aufzunehmenden Objekt in einem Abstand angeordnet werden, so dass die von den Einzelsensoren erfassbaren Bildbereiche des aufzunehmenden Objekts zumindest geringfügig überlappen. Die Überlappungsbereiche, die dann von jeweils benachbarten Einzelsensoren jeweils doppelt aufgenommen werden, können dann in der Auswerteeinrichtung durch entsprechende Auswertealgorithmen wieder herausgefiltert werden.

Ausführungsbeispiele der Erfindung sind in den Zeichnungen dargestellt und werden im folgenden näher beschrieben.

Es zeigen:
- Fig. 1: den schematischen Aufbau eines Bildsensors in einem ersten Betriebszustand;
- Fig. 2: den Bildsensor gemäß Fig. 1 in einem zweiten Betriebszustand.

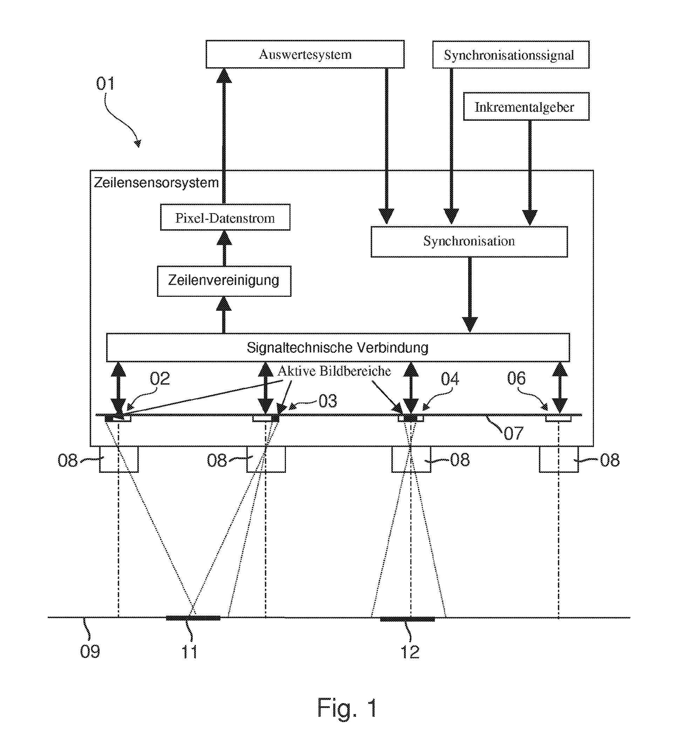

Der in Fig. 1 dargestellte Bildsensor 01 weist vier nebeneinander beabstandet angeordnete Einzelsensoren 02; 03; 04 und 06 auf, die auf einer gemeinsamen Elektronikplatine 07 bestückt sind. Jedem der Einzelsensoren 02; 03; 04 und 06 ist eine Optik 08 zugeordnet, durch die ein aufzunehmendes Objekt 09 entlang einer Linie auf die Einzelsensoren 02 bis 06 abgebildet werden kann. Die Einzelsensoren, 02; 03; 04 und 06, die Optiken 08 und das aufzunehmende Objekt 09 sind gemäß Fig. 1 jeweils auf einer Geraden angeordnet. Jeder Optik 08 liegen die zu erfassenden Bildbereiche des aufzunehmenden Objektes 09 direkt gegenüber.

Die Eigenschaften der Optiken 08 und der Abstand zwischen den Bildsensoren 01 und dem aufzunehmenden Objekt 09 sind dabei so gewählt, dass zum einen grundsätzlich die gesamte Breite des aufzunehmenden Objekts 09 auf die Einzelsensoren 02 bis 06 abgebildet werden kann und zum anderen die von den Einzelsensoren 02 bis 06 jeweils erfassbaren Bildbereiche zumindest eine geringfügige Überlappung aufweisen.

Jeder der Einzelsensoren 02 bis 06 ist aus einer Vielzahl nebeneinander angeordneter Pixel aufgebaut, die in Abhängigkeit von ihrer geometrischen Anordnung einzeln angesteuert werden können. Dies erlaubt das selektive Ausblenden einzelner Bildbereiche, um dadurch die zu verarbeitende Menge der Bilddaten zu reduzieren.

Um festzulegen, welche Bildbereiche zwecks Reduzierung der zu verarbeitenden Menge an Bilddaten ausgeblendet werden können, müssen zunächst alle Pixel zur Feststellung der Lage eines Merkmales ausgelesen werden. Aufgrund der erfassten Merkmale wird nun festgelegt, welche Pixel nicht ausgelesen werden. Anschließend werden nur die verbleibenden Pixel ausgelesen, wobei jeder Pixel ein eigenes Signal an die Auswerteeinheit liefert.

Bei dem in Fig. 1 dargestellten Betriebszustand trägt das aufzunehmende Objekt 09 zwei wichtige Merkmale 11 und 12, deren Vorhandensein und geometrische Lage von der Auswerteeinrichtung ausgewertet werden soll. Die anderen Bereiche des aufzunehmenden Objekts 09 sind für die Auswertung ohne Relevanz. Um diese Auswerteaufgabe in einfacher Weise durchführen zu können, werden die Pixel der Einzelsensoren 02 bis 06 selektiv ausgelesen. Da sich in dem vom Einzelsensor 06 abgebildeten Bildbereich des aufzunehmenden Objekts 09 keine wichtigen Merkmale befinden, werden die Pixel des Einzelsensors 06 überhaupt nicht ausgelesen, so dass der entsprechende Bildbereich vollständig ausgeblendet ist. Die notwendigen Parameter für die Bildfeldeinschränkung können dem Bildsensor von der Auswerteeinrichtung vorgegeben werden.

Beim Einzelsensor 04 wird das wichtige Merkmal 12 des aufzunehmenden Objekts 09 von den mittleren Pixel des Einzelsensors 04 aufgenommen. Dementsprechend werden nur die mittleren Pixel des Einzelsensors 04 ausgelesen, wohingegen die am linken und rechten Rand des Einzelsensors 04 angeordneten Pixel ausgeblendet werden.

Das wichtige Merkmal 11 ist auf dem Objekt 09 derart gelegen, dass es jeweils teilweise von den Einzelsensoren 02 und 03 aufgenommen wird. Da nur die Lage des Merkmals 11 von Interesse ist, werden die Einzelsensoren 02 und 03 derart angesteuert, dass beim Einzelsensor 02 nur die Pixel am linken Rand und beim Einzelsensor 03 nur die Pixel am rechten Rand ausgelesen werden. Alle anderen Pixel der Einzelsensoren 02 und 03 werden nicht ausgelesen, so dass die entsprechenden Bildbereiche des Objekts 09 ausgeblendet sind. Bei der Auswertung der von den Einzelsensoren 02 und 03 gelieferten Bilddaten in Bildsensor wird der Überlappungsbereich herausgerechnet und außerdem die Bilddaten derart umgerechnet, dass die auszuwertenden Daten der geometrischen Form des Merkmals 11 entsprechen.

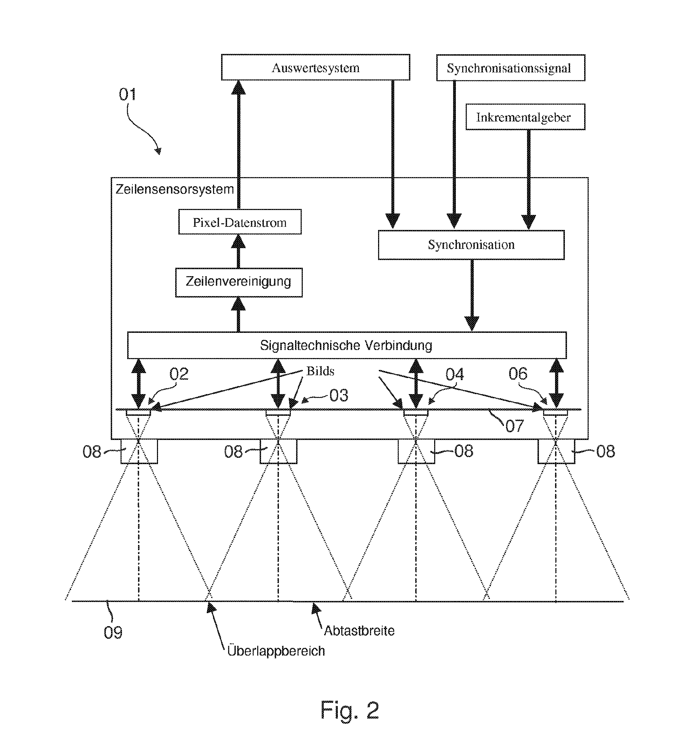

In Fig. 2 ist der Bildsensor 01 in einem zweiten Betriebszustand dargestellt. In diesem Betriebszustand werden alle Pixel der Einzelsensoren 02 bis 06 ausgelesen, so dass eine Linie über die gesamte Breite des aufzunehmenden Objekts 09 aufgenommen und ausgewertet wird. Die Aufnahmebereiche der Einzelsensoren 02 bis 06 überlappen dabei geringfügig, um Lücken im Aufnahmebereich des Bildsensors 01 insgesamt auszuschließen. Der Bildsensor reicht jedoch mit dem Datenstrom jeden Bildpunkt auf der gesamten Abtastlinie nur einmal an die nachfolgende Auswerteeinrichtung weiter.

In einem dritten Betriebszustand des Bildsensors kann auch in Teilbereichen der gesamten Abtastlinie durch das Auslesen von Subpixel (es werden zwischen den ausgelesenen Pixel Lücken gelassen) die Auflösung reduziert werden. Zusätzlich zu einer möglichen Einschränkung der ausgelesenen Bildbereiche über die gesamte Bildsensorlänge können hier unterschiedlich wichtige Bereiche mit voller oder reduzierter Auflösung ausgelesen werden.

Der Bildsensor kann insbesondere zur Inspektion von Druckerzeugnissen verwendet werden.

### Bezugszeichenliste

- 01: Bildsensor
- 02: Einzelsensor
- 03: Einzelsensor
- 04: Einzelsensor
- 05: -
- 06: Einzelsensor
- 07: Elektronikplatine
- 08: Optik
- 09: aufzunehmendes Objekt
- 10: -
- 11: wichtiges Merkmal (aufzunehmendes Objekt)
- 12: wichtiges Merkmal (aufzunehmendes Objekt)

## Patentansprüche

1. Verfahren zur Auswertung eines elektronischen Bildsensors, der mehrere Einzelsensoren (02; 03; 04; 06) mit jeweils mehreren Pixel aufweist, wobei die Pixel mindestens eines Einzelsensors (02; 03; 04) nur teilweise ausgelesen werden, so dass einzelne Bildbereiche selektiv ausgeblendet werden, um die zu verarbeitenden Menge von Bilddaten zu reduzieren, **dadurch gekennzeichnet, dass** die Ausgangssignale der Einzelsensoren (02; 03; 04; 06) derart aufeinander bezogen ausgewertet werden, dass die entlang einer Linie des aufzunehmenden Objekts (09) aufgenommenen Bildinformationen geometrisch lagerichtig verarbeitet werden, dass die Pixel eines einen Teil der Linie des aufzunehmenden Objekts (09) abbildenden Einzelsensors (02; 03; 04) nur teilweise ausgelesen werden und dass die auszublendenden Teilbereiche abhängig von der Bewegung des aufzunehmenden Objekts (09) verändert werden.

2. Verfahren nach Anspruch 1, **dadurch gekennzeichnet, dass** bevor die Pixel mindestens eines Einzelsensors (02; 03; 04) teilweise ausgelesen werden, alle Pixel mindestens eines Einzelsensors (02; 03; 04; 06) zur Feststellung der Lage eines Merkmales (11; 12) ausgelesen werden und danach festgelegt wird, welche Pixel nicht ausgelesen werden.

3. Verfahren nach Anspruch 1, **dadurch gekennzeichnet, dass** die verbleibenden Pixel mindestens eines Einzelsensors (02; 03; 04) ausgelesen werden, wobei jeder Pixel ein eigenes Signal abgibt.

4. Verfahren nach Anspruch 1, **dadurch gekennzeichnet, dass** aus diesen Daten eine Lage eines Merkmals (11; 12) ermittelt wird.

5. Verfahren nach Anspruch 1, **dadurch gekennzeichnet, dass** aus diesen Daten der Bildbereich des Merkmals (11; 12) mit reduzierter Auflösung ermittelt wird.

6. Verfahren nach Anspruch 1, **dadurch gekennzeichnet, dass** durch jeden Pixel ein eigenes Signal an die Auswerteeinrichtung geliefert wird.

7. Verfahren nach Anspruch 1, **dadurch gekennzeichnet, dass** der Bildsensor zur Inspektion von Druckerzeugnissen verwendet wird.

8. Verfahren nach Anspruch 1, **dadurch gekennzeichnet, dass** jedem Einzelsensor (02; 03; 04; 06) eine eigene Optik (08) zur Abbildung eines Bildbereichs des aufzunehmenden Objekts (09) auf die Einzelsensoren (02; 03; 04; 06) zugeordnet wird.

9. Verfahren nach Anspruch 8, **dadurch gekennzeichnet, dass** jeder Optik (08) die zu erfassenden Bildbereiche des Objektes (09) direkt gegenüberliegen angeordnet werden.

10. Verfahren nach Anspruch 9, **dadurch gekennzeichnet, dass** Einzelsensor (02; 03; 04; 06), Optik (08) und aufzunehmendes Objekt (09) jeweils auf einer Geraden angeordnet werden.
